# EUROPÄISCHE PATENTANMELDUNG

(11) **EP 3 372 499 A1**
(43) Veröffentlichungstag der Anmeldung: **12.09.2018**
(21) Anmeldenummer: 18159977.0
(22) Anmeldetag: 05.03.2018
(51) Int. Cl.: B64C 39/02

(54) **UNBEMANNTES FLUGGERÄT, SYSTEM UND VERFAHREN ZUR BEKÄMPFUNG VON BEDROHUNGSFLUGKÖRPERN**

(30) Priorität: 06.03.2017 DE 102017002156
(71) Anmelder: MBDA Deutschland GmbH, 86529 Schrobenhausen (DE)
(72) Erfinder: Krüger, Reinhard, 83317 Rückstetten (DE); Schmitz, Ernst, 56077 Koblenz (DE); Surauer, Christian, 83339 Chieming (DE); Surauer, Michael Alois, 83339 Chieming (DE); Weberstetter, Christoph, 83435 Bad Reichenhall (DE)
(74) Vertreter: Isarpatent

(57) **Zusammenfassung**

Die vorliegende Erfindung betrifft ein unbemanntes Fluggerät (10) zur Bekämpfung von Bedrohungsflugkörpern in einem Luftraum, welches nach Zielzuordnung durch eine Bedienperson weitgehend autonom gesteuert durch den Luftraum bewegbar ist. Das Fluggerät (10) hat eine kinematisch geeignete Trägerstruktur mit Antriebsmitteln zur Erzeugung von Querbeschleunigungen in drei Freiheitsgraden zur steuerbaren Bewegung des Fluggeräts (10) durch den Luftraum. Um ein Fluggerät (10) zur Verfügung zu haben, welches mit geringem Aufwand in der Lage ist, einen lokalen Luftraum aufzuklären und zu schützen und zuverlässig Flugkörper am Eindringen in den betreffenden Luftraum zu hindern und/oder diese unschädlich zu machen und wieder zu entfernen ist eine Avionikeinrichtung (20) zur Lagebestimmung des Fluggeräts (10) und Beeinflussung von dessen Bewegung vorgesehen, um die Relativposition so zu beeinflussen, dass die mitgeführte Bekämpfungsvorrichtung (30) optimal positioniert und ausgerichtet wird, um Bedrohungsflugkörper flugunfähig zu machen und aus dem Luftraumabschnitt zu entfernen.

## Beschreibung

Die vorliegende Erfindung betrifft ein unbemanntes Fluggerät zur Bekämpfung von Bedrohungsflugkörpern in einem lokal begrenzten Luftraum, welches nach Zielzuordnung durch eine Bedienperson weitgehend autonom gesteuert durch den Luftraum bewegbar ist, wobei das unbemannte Fluggerät eine fliegende Trägerplattform aufweist, die dazu vorgesehen und eingerichtet ist, die Distanz zwischen dem Fluggerät und einem in einen Luftraumabschnitt eingedrungenen Bedrohungsflugkörper zu verringern und das Fluggerät optimal zu positionieren. Außerdem betrifft die Erfindung ein System und ein Verfahren zur Bekämpfung von Bedrohungsflugkörpern.

Die der Erfindung zu Grunde liegenden Trägerplattformen können als autonomes VTOL (Akronym von Vertical Take Off and Landing, also bspw. Multikopter, Helikopter) oder auch als autonomer Ebenenflügler (Kleinflugzeug, Lenkflugkörper) ausgebildet sein und sind im Prinzip bekannt. Diese können entweder durch eine Bedienperson unmittelbar gesteuert, aber auch nach entsprechender Programmierung autonom gesteuert durch den betreffenden Luftraum bewegt werden. Damit ist es möglich, etwa Bedrohungsdrohnen als Bedrohungsflugkörper mit Verfahren aus der taktischen Luftabwehr zu verfolgen, autonom zu bekämpfen und damit abzuwehren. Im angloamerikanischen Sprachgebrauch werden solche Fluggeräte als "Counter Unmanned Aerial Systems" (CUAS) bezeichnet.

Bedrohungsflugkörper sind meistens Kleindrohnen aus dem Modellbaubereich (<25kg). Sie sind mittlerweile Stand der Technik und können in jedem besser sortierten Modellbaugeschäft von Privatpersonen in unterschiedlicher Größe und Nutzlast gekauft, bedient und beladen werden. Diese Kleindrohnen werden in der Mehrzahl der Fälle friedlich für gewerbliche Aufgaben mit Kameras beladen, oder rein privat als Hobby verwendet.

Die zu bekämpfenden Bedrohungsflugkörper unterscheiden sich hierbei durch zwei verschiedene Steuerungsmethoden. Zum einen gibt es die sogenannte "Man in the-Loop"-Methode, wobei sich ein außenstehender Pilot im Lenkungskreis des Flugkörpers befindet, der zumindest dessen Flugbahn vorgibt und daher mit dem Flugkörper sowohl in der Regel in Sichtkontakt, als auch in ständigem Funkkontakt stehen muss. Dabei wird der Anflug eher auf einer einfachen Bahn stattfinden wobei die Ausweichmanöver aufgrund unmittelbarer Steuerung sehr agil sein können. Andererseits kann der Flugkörper autonom fliegen wobei kein Sichtkontakt zum Piloten nötig ist. Die vorprogrammierte Anflugbahn kann dabei komplexer sein. Mit Ausweichmanöver ist bei diesen Bedrohungsflugkörpern jedoch nicht zu rechnen weil dieses ein Erkennen des CUAS voraussetzen würde.

Der Einsatz des vorgenannten unbemannten Fluggerätes kann dabei auch Teil eines übergeordneten Luftabwehrsystems gegen solche Bedrohungsflugkörpern sein. Je nach den detektierten Eigenschaften und dem vorher festgelegten Bedrohungslevel können hierbei hierarchisch verschiedene Abwehrmaßnahmen des CU-AS gegen eine oder mehrere Bedrohungsflugkörper eingeleitet werden.

Mithin existiert jedenfalls bereits vor dem Eintritt eines oben nur rudimentär skizzierten, potentiellen Schadensereignisses ein Bedarf, sich durch den Entwurf geeigneter Abwehrmaßnahmen auf eine Vielzahl möglicher Bedrohungsszenarien vorzubereiten, und entsprechend den lokalen Luftraum über solch sensiblen Bereichen aufklären und zu schützen. Dabei kann in einem insbesondere urbanen (aber auch einem nicht urbanen) lokal begrenzten und überwachten Luftraum mit einem Radius von einigen 1000 m das unerlaubte Eindringen eines Bedrohungsflugkörpers in Form einer Bedrohungsdrohne mit Hilfe des CUAS verhindert werden und diese Kleindrohne unschädlich gemacht werden.

Es ist daher die Aufgabe der vorliegenden Erfindung, ein Fluggerät der eingangs genannten Art zur Verfügung zu stellen, welches mit geringem Aufwand in der Lage ist, einen lokalen Luftraum aufzuklären und zu schützen und zuverlässig Bedrohungsflugkörper am Eindringen in den betreffenden Luftraum zu hindern und/oder unschädlich zu machen und wieder zu entfernen.

Diese Aufgabe wird erfindungsgemäß durch die Merkmale des Anspruchs 1 gelöst. Die Lösung besteht demnach insbesondere darin, bei einer fliegenden Trägerplattform der eingangs genannten Art eine Bekämpfungsvorrichtung mit Avionik zur Bestimmung der relativen Position und Lagebestimmung des Fluggeräts und Beeinflussung der Bewegung vorzusehen ist, um die Distanz zwischen dem Fluggerät und einem in einen Luftraumabschnitt eindringenden oder eingedrungenen Bedrohungsflugkörper zu verringern und anschließend diesen so zu verfolgen das eine mitgeführte Wirkvorrichtung optimal zum Bedrohungsflugkörper ausgerichtet wird. Hierfür kann das Fluggerät erfindungsgemäß mit einer Wirkvorrichtung versehen sein, die dazu vorgesehen und eingerichtet ist, den Bedrohungsflugkörper zu bekämpfen. Das Bekämpfen des Bedrohungsflugkörpers kann dabei sowohl bedeuten, diesen flugunfähig zu machen, als auch diesen aus dem Luftraum zu entfernen oder auch beides gleichzeitig oder nacheinander.

Die Bekämpfung kann hierbei z.B. darin bestehen, mittels einer Wirkeinrichtung physikalisch auf den Bedrohungsflugkörper (Projektile, Schrott, Explosion) einzuwirken, und diesen derart flugunfähig zu machen, so dass eine Fortsetzung des betreffenden Schädigungsauftrags des Bedrohungsflugkörpers nicht möglich ist.

Eine andere Möglichkeit des Bekämpfens kann darin bestehen, den Bedrohungsflugkörper aus dem Luftraum zu entfernen, und zwar mittels einer in dem Bekämpfungssystem integrierten Fangvorrichtung, bei der bspw. die Kleindrohne eingefangen wird und anschließend zusammen mit dem CUAS aus dem Luftraum befördert wird.

Unter den erwähnten Bedrohungsflugkörper, beispielsweise Bedrohungsdrohnen, kann man hierbei Kleinflugkörper mit einem Gesamtgewicht in einer Größenordnung kleiner gleich etwa 25 kg, und Geschwindigkeiten kleiner etwa 150km/h verstehen. Dies können zum Beispiel Helikopter-Systeme, Multikopter-Systeme aber auch ferngesteuerte Motorflugzeuge, Segelflugzeuge oder Luftschiffe sein.

In den Unteransprüchen finden sich vorteilhafte Ausgestaltungen und Verbesserungen der Erfindung.

Um ein in einen Luftraum eingedrungenen Flugkörper in geeigneter Weise bekämpfen zu können, sollte die Bekämpfungsvorrichtung so positioniert und ausgerichtet werden, um in gewünschtem Maße auf die Bedrohungsdrohne einwirken zu können. Deswegen ist bei einer vorteilhaften Ausführungsform des Fluggeräts die Bekämpfungsvorrichtung mit einer Detektionseinrichtung und einer Wirkmitteleinrichtung versehen . Hierbei kann der Detektionseinrichtung insbesondere die Position und Lagebestimmung und Ausrichtung bezüglich des Fluggeräts bzw. Rumpfstruktur zugewiesen sein, während die Unschädlichmachung des Flugkörpers mit verschiedenen möglichen Wirkmitteln der Wirkmitteleinrichtung vorbehalten bleibt.

Für die optimale Positionierung der Bekämpfungsvorrichtung relativ zum Bedrohungsflugkörper ist die Trägerplattform zuständig. Diese muss eine höhere Geschwindigkeit und vor allem höhere Querbeschleunigungsfähigkeit besitzen als der Bedrohungsflugkörper.
Der autonom fliegende Träger kann dabei beispielsweise als VTOL wie ein Multikopter oder klassischer Helikopter ausgebildet sein oder auch als Ebenenflügler wie ein Kleinflugzeug oder Lenkflugkörper.

In einer zweckmäßigen Weiterbildung des erfindungsgemäßen Fluggeräts kann dabei die Bekämpfungsvorrichtung durch wenigstens ein Halteglied mit der Plattform oder der jeweiligen Rumpfstruktur statisch oder dynamisch verbindbar oder verbunden sein. Eine statische Verbindung etabliert dabei eine feste Beziehung zwischen Bekämpfungsvorrichtung und Plattform, was den Sensoraufwand zur Berechnung von Relativpositionen und Lage reduziert.

Bevorzugt ist andere Weiterbildung des Fluggeräts mit einer dynamischen Verbindung der Bekämpfungsvorrichtung mit der Trägerplattform versehen, die eine flexible und unabhängige Nachführung und Anpassung der Bekämpfungsvorrichtung an den dynamische und gegebenenfalls unregelmäßig bewegten Bedrohungsflugkörper gestattet, weswegen eine entsprechende Weiterbildung des erfindungsgemäßen Fluggeräts bei dynamischer Verbindung durch das Haltglied die Bekämpfungsvorrichtung wenigstens einen Freiheitsgrad aufweist. Der große Vorteil einer solchen Ausbildung ist das man damit die Ausrichtung der Bekämpfungsvorrichtung und die Lage der Trägerplattform voneinander entkoppelt.

Hierdurch kann die Bekämpfungsvorrichtung beispielsweise um eine Achse verschwenkt werden. Die dynamische Ausbildung gestattet aber auch mehr Freiheitsgrade, die etwa jeweils durch ein Gelenk abgebildet sein können.

Eine schnelle und exakte Lageänderung der Bekämpfungsvorrichtung bezüglich der Trägerplattform kann mittels einer Ausführungsform des Fluggeräts erzielt werden, bei der eine Bewegung in jedem der vorliegenden Freiheitsgrade jeweils insbesondere elektrisch angetrieben ist. Dies kann zum Beispiel durch eine entsprechende Anzahl elektrische Stellantriebe erreicht werden, die eine Bekämpfungsvorrichtung, die selbst wiederum an einem Träger angeordnet ist, jeweils im Rahmen ihrer Freiheitsgrade bewegt. Diese Antriebe können die Bekämpfungsvorrichtung etwa verschwenken, beispielsweise um zueinander orthogonale Achsen, so dass eine entsprechende gelenkige Anordnung mit Blick auf die Freiheitsgrade bezüglich des Trägers oder der Bekämpfungsvorrichtung eine Art kardanische Aufhängung oder Lagerung bildet, die entsprechend des englischen Begriffs auch Gimbal genannt wird und entsprechend eine im Prinzip beliebige Positionierung der Bekämpfungsvorrichtung bezüglich des Fluggeräts bzw. seiner Plattform gestattet. Es sind aber auch andere Antriebsformen denkbar.

Um in zuverlässiger und schneller Art und Weise die Position, und damit verbunden die Ausrichtung der Bekämpfungsvorrichtung bezüglich der Plattform des Fluggeräts oder auch bezüglich eines einer Detektionsvorrichtung erfassten Ziels in Form einer Bedrohungsflugkörper erfassen und verarbeiten zu können, kann in einer vorteilhaften Ausführung des erfindungsgemäßen Fluggeräts die Bekämpfungsvorrichtung mit wenigstens einem, insbesondere mit einer Mehrzahl von Lagegebern, bevorzugt mit Winkellagegebern in Form von Resolvern, versehen sein, die die Lage der Bekämpfungsvorrichtung relativ zur Trägerplattform bestimmen. Anstelle eines elektromagnetischen Messumformers, der die Lage der Bekämpfungsvorrichtung in eine elektrisches Signal für die Steuerung wandelt, können auch andere Geber, beispielsweise Potentiometer oder dergleichen mehr zum Einsatz kommen. Resolver stellen in diesem Zusammenhang in der Regel eine robustere und kostengünstigere und weitgehend verschleißfreie Lösung dar.

Um bezüglich des Fluggeräts ein Ziel definieren, erfassen und verfolgen zu können, ist es zweckmäßig, bei einer Weiterbildung des Fluggeräts die Detektionseinrichtung mit wenigstens einem, insbesondere mit einer Mehrzahl von Erfassungsmitteln zu versehen, wobei bevorzugt das wenigstens eine Erfassungsmittel zumindest einen bildgebenden Sensor und/oder ein Funkortungssystem aufweist. Hierdurch kann das zu erfassende Zielobjekt sicher und eindeutig erfasst und verfolgt werden, wodurch sich durch eine Steuerung zuverlässig ein Verfolgungs- und/oder insbesondere ein (mutmaßlicher) Abfangskurs berechnen lässt, auf den das Fluggerät anhand von entsprechend zu erzeugenden Steuersignalen geschickt wird.

Situationsabhängig sind unterschiedliche Szenarien denkbar, die sich unterscheidende Bekämpfungsmaßnahmen notwendig machen, auf die die Bekämpfungsvorrichtung vorbereitet sein muss. Dies kann insbesondere bedeuten, mittels verschiedener Wirkmittel gleichzeitig oder nacheinander auf eine Bedrohung in Form des jeweiligen Bedrohungsflugkörpers einwirken zu können, dies gegebenenfalls je nach Eskalationsstufe auch mehrfach nacheinander oder gegen disjunkte Ziele. Deswegen kann eine Ausführung des erfindungsgemäßen Fluggeräts vorsehen, dass die Wirkmitteleinrichtung beim Bekämpfen des in den Luftraumabschnitt eingedrungenen Bedrohungsflugkörpers ein Wirkmittel absondert, welches den Flugkörper abfängt und/oder flugunfähig macht und/oder in seiner strukturellen Integrität beeinträchtigt. Hierdurch kann sichergestellt werden, dass durch Einwirkung seitens des Fluggeräts der Bedrohungsflugkörper zuverlässig ausgeschaltet und in seiner eigenen Wirkungsweise behindert wird. Solche Wirkmittel können etwa als Projektil-Kanone oder mit gerichteten Sprengkopf und Splitterkegel ausgeführt sein. Abseits von solchen unmittelbaren Einwirkungen auf den Bedrohungsflugkörper, kann auf diesen mittelbar auch in einer Weise eingewirkt werden, dass beispielsweise etwa Kommunikationswege des Bedrohungsflugkörpers mit einer lenkenden Einrichtung oder Person oder mit einem Satellitennavigationssystem unterbunden werden. Hierfür kann etwa vorgesehen sein, die Bekämpfungsvorrichtung mit wenigstens einem sogenannten "Jammer" versehen sein, der die betreffenden Funkstrecken stört.

In einer bevorzugten Weiterbildung des erfindungsgemäßen Fluggeräts, mittels derer der die Bedrohung bildende Flugkörper abgefangen und anschließend eingefangen werden kann, sondert die Wirkmitteleinrichtung ein Wirkmittel ab, welches den zu bekämpfenden Flugkörper zumindest abschnittsweise einhüllt. Hierdurch ist ein kontrolliertes Abfangen möglich, das die vollständige Kontrolle über das abgefangene Bedrohungsobjekt ermöglicht, einschließlich dem Verbringen aus dem Bereich des Luftraums ohne weitere Gefährdung von Personen und/oder Objekten. Unter solchen Gesichtspunkten kann das Wirkmittel nämlich beispielsweise als Netzkanone, die als Wirkmittel ein physikalisches Netz verschießt, ausgebildet sein. Dieses Netz wird zum Beispiel durch C0₂ Kartuschen aus der Kanone geschleudert und ist vermittels aerodynamisch geformter Trimmgewichte in der Lage, sich großflächig auszubreiten.

Wird der Bedrohungsflugkörper, beispielsweise eine Drohne, von dem Netz getroffen, so verhängt sich letzterer in dem Netz und die Trimmgewichte umschließen den Bedrohungsflugkörper. Dieser wird derart flugunfähig gemacht und stürzt mit dem Netz zu Boden. Zusätzlich können an dem Netz oder an den Trimmgewichten beispielsweise Wiederhaken angebracht werden, um bei Umschließen des Bedrohungsflugkörpers durch das Netz dessen unbeabsichtigte erneute Öffnung zu verhindern.

Besonders bevorzugt ist eine Weiterbildung des erfindungsgemäßen Fluggeräts, bei dem das den Bedrohungsflugkörper zumindest abschnittsweise einhüllende Wirkmittel nach Absonderung durch die Wirkmitteleinrichtung mit dem Fluggerät abhängig von der durch den Bedrohungsflugkörper gebildeten Traglast verbunden bleibt. Dabei kann an dem erwähnten Netz etwa eine Reißleine vorgesehen sein, an deren Ende sich ein Fallschirm in einer Einrichtung oder Aufnahme an der Plattform des Fluggeräts befindet. Bei Unterschreiten der maximalen Traglast der Plattform, hängt dann der erbeutete Bedrohungsflugkörper an der Plattform des Fluggeräts und kann zusammen mit diesem, etwa von einem Operator koordiniert, aus dem Gefahrenbereich geflogen werden. Bei Überschreiten der maximalen Traglast der Plattform kann an der Reißleine der Fallschirm aus der Vorrichtung herausgezogen werden. Der Fallschirm entfaltet sich sodann, und das Netz mit dem selbst flugunfähigen Flugkörper gleitet zu Boden. Dadurch ist eine geringe Absturzgeschwindigkeit der flugunfähigen Beutedrohne gewährleistet ohne sich am Boden befindliche Personen ernsthaft gefährden oder gar verletzen zu können.

Gemäß einer bevorzugten Weiterbildung, die an dem Fluggerät eine Positionsänderung in seinen Koordinaten verursacht, kann bei dem erfindungsgemäßen Fluggerät die Avionikeinrichtung mit einem Flugzustandsregler versehen sein, der die Positionsänderung in drei Freiheitsgraden regelt. Hierbei kommt es darauf an, durch den Flugzustandsregler die geforderten Querbeschleunigungen von einem Zielsystem des Fluggeräts auf die jeweilige Plattform umzusetzen.

In einer weiteren vorteilhaften Ausführung des Fluggeräts kann die Avionikeinrichtung mit einem Navigationssystem versehen sein, dem eine Mehrzahl von Sensoren und/oder Empfängern zugeordnet ist, welchem mit dem Navigationssystem Daten austauschen. Auf diese Weise ist die Avionikeinrichtung jederzeit in der Lage ihre Position/Geschwindigkeit innerhalb eines Bezugssystems, insbesondere innerhalb eines Inertialsystems zu bestimmen. Es sind prinzipiell auch sich drehende oder anderweitig beschleunigte Bezugssysteme denkbar. Das Navigationssytem kann dabei Sensordaten mit einer Inertial Measurement Unit (IMU), einem GPS, einem Magnetometer und einem Barometrischen Höhensensor austauschen und zusammenführen, derart lassen sich die translative und rotatorische Größen wie Position/Lage und Geschwindigkeiten/Drehraten des Fluggeräts bezüglich eines Bezugssystems, bevorzugt eines Inertialsystems, rekonstruieren.

Um die Bewegungen des Fluggeräts insbesondere bezüglich des zu bekämpfenden Flugkörpers in geeigneter Weise beeinflussen und den Flugkörper zuverlässig bekämpfen zu können, ist es von Vorteil, wenn bei einer Ausführung des Fluggeräts die Avionikeinrichtung ein Zielsystem aufweist, welches die relative Bewegung bezüglich der Bedrohungsdrohne koordiniert und/oder anhand von der Detektionseinrichtung empfangenen Daten, etwa Peildaten, die Bekämpfungsvorrichtung ausrichtet und/oder den Zündzeitpunkt des Bekämpfungsmittels bestimmt und/oder den Zeitpunkt einer autonomen Auslösung eines der Bedrohungsdrohne abfangenden Bekämpfungsmittels bestimmt.

In einer weitere Ausbildung des CUAS kann die Trägerplattform oder Rumpfstruktur mit wenigstens einem Rahmenteil versehen sein, an welchem Antriebsmittel des Fluggeräts anordenbar oder angeordnet sind. Darüber hinaus kann das Rahmenteil der Plattform weiter Aufnahmen oder Befestigungsmöglichkeiten oder - mittel bieten, um weitere Einrichtungen des Fluggeräts unterzubringen. Für den Fall, dass das Fluggerät beispielsweise als Multikopter-VTOL-Plattform ausgebildet ist, können etwa in Endbereichen oder an Endpunkten des Rahmenteils rotatorisch bewegliche Anlenkpunkte für Antriebe vorgesehen sein, die der Plattform und den daran angeordneten Einrichtungen des Fluggeräts die zur Bekämpfung von Flugkörpern notwendige Beweglichkeit verleihen.

Die Aufgabe wird gleichermaßen gelöst durch System zur Bekämpfung von in einen Luftraumabschnitt eindringenden Bedrohungsflugkörpern mittels zumindest eines Fluggeräts, bevorzugt einer Mehrzahl von Fluggeräten, insbesondere solchen wie sie vorstehend geschildert wurden. Hierbei kann mit einem entsprechenden Luftabwehrsystem, welches etwa mit einer übergeordneten Steuer- und/oder Entscheidungsinstanz ausgestattet sein kann, in mehrerlei Hinsicht Flexibilität erzielt werden, da sich mit einer kontrolliert steuerbaren Mehrzahl von Fluggeräten entweder die Überwachungsdichte oder -frequenz in einem bestimmten Gebiet erhöhen lässt oder aber sich die zugeordnete Aufgabe auf eine größere Anzahl von Einzelgebieten oder einfach ein an sich größeres Gebiet erstrecken lässt.

Schließlich wird die Aufgabe auch gelöst durch ein Verfahren zur Bekämpfung eines Flugkörpers durch Tracking mittels eines unbemannten Fluggeräts in einem begrenzten Luftraum, insbesondere eines Fluggeräts nach einem der vorhergehende Ansprüche, mit zumindest den folgenden Schritten:
Zur Verfügung stellen eines Fluggeräts mit einer Trägerplattform, der eine Avionikeinrichtung zugeordnet ist, wobei an der Trägerplattform eine Bekämpfungseinrichtung befestigt ist, welche ein Zielverfolgungssystem, eine Ausrichtevorrichtung, eine Detektionseinrichtung und eine Bekämpfungseinrichtung aufweist;
Erfassen und Verfolgen einer in den Luftraum eindringenden Bedrohungsdrohne durch Auswertung von Daten eines Navigationssystems und von der Detektionseinrichtung durch das Zielverfolgungssystem;
Annähern des Fluggeräts an den Bedrohungsflugkörper und Ausrichten der Bekämpfungseinrichtung auf den zu bekämpfenden Bedrohungsflugkörper durch die Ausrichtevorrichtung;
Auslösen eines Bekämpfungsvorgangs in einem durch das Zielverfolgungssystem berechneten optimalen Zeitpunkt;
Abfangen oder Einfangen des Bedrohungsflugkörpers durch die Bekämpfungseinrichtung; und
Entfernen des Bedrohungsflugkörpers aus dem Luftraum.

Hinsichtlich der Einzelheiten solcher Szenarien kann dabei auf die vorstehenden Ausführungen verwiesen.

Die obigen Ausgestaltungen und Weiterbildungen lassen sich, sofern sinnvoll, beliebig miteinander kombinieren. Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmalen der Erfindung. Insbesondere wird dabei der Fachmann auch Einzelaspekte als Verbesserungen oder Ergänzungen zu der jeweiligen Grundform der vorliegenden Erfindung hinzufügen.

Die Erfindung wird im Folgenden anhand von Ausführungsbeispielen unter Bezugnahme auf die beiliegenden Figuren der Zeichnung näher erläutert. In teilweise schematisierter Darstellung zeigen hierbei
- Fig. 1: eine perspektivische Seitenabsicht eines ersten Ausführungsbeispiels eines Fluggeräts gemäß der Erfindung; und
- Fig. 2: eine perspektivische Seitenabsicht eines zweiten Ausführungsbeispiels eines Fluggeräts gemäß der Erfindung.

In allen Figuren sind gleiche bzw. funktionsgleiche Elemente und Vorrichtungen - sofern nichts Anderes angegeben ist - mit denselben Bezugszeichen versehen worden.

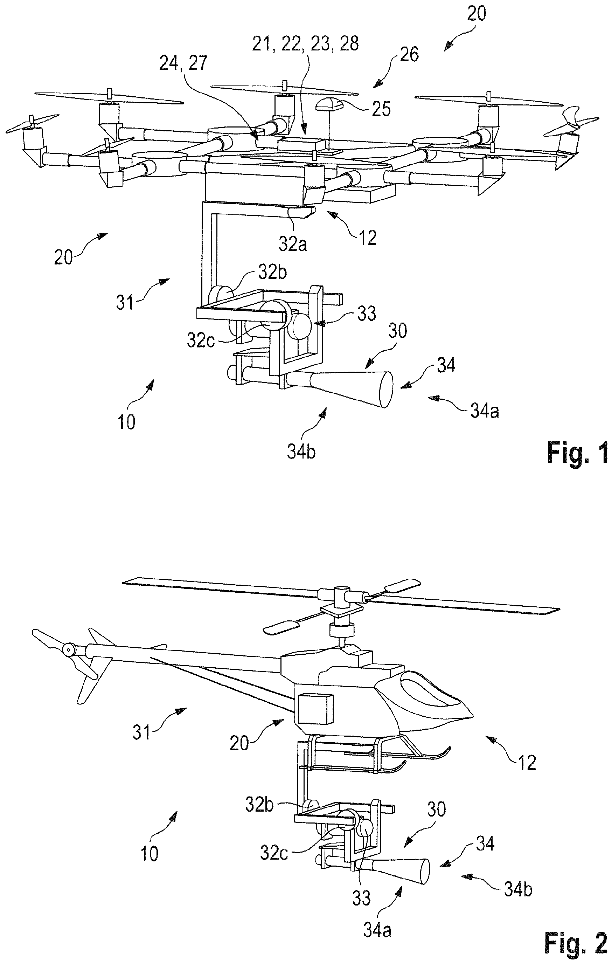

So zeigen die Figuren 1 und 2 jeweils ein im Ganzen mit 10 bezeichnetes, unbemanntes Fluggerät zur Bekämpfung von nicht weiter dargestellten Bedrohungsflugkörpern in einem Luftraum, welches durch eine Bedienperson unmittelbar oder nach entsprechender Programmierung autonom gesteuert durch den Luftraum bewegbar ist. Die Fluggeräte 10 der Fig.1 und 2 sind dabei jeweils mit einer an einer als Trägerplattform 12 ausgebildeten Struktur eines n-Multikopters (Fig.1) und einmal als Struktur eines Helikopters (Fig.2) gezeigt. Es können aber ebenso Ebenenflügler oder Mehrflügler wie bei Lenkflugkörpern als Trägerplattform 12 in Frage kommen.

Überdies weisen die Fluggeräte 10 der Fig.1 und 2 jeweils eine Avionikeinrichtung 20 zur Lagebestimmung des Fluggeräts 10 und Beeinflussung von dessen Bewegung auf, um die Distanz zwischen dem Fluggerät 10 und einem in einen Luftraumabschnitt eindringenden oder eingedrungenen Bedrohungsflugkörper zu verringern. Außerdem ist das Fluggerät 10 jeweils mit einer Bekämpfungsvorrichtung 30 versehen, die dazu vorgesehen und eingerichtet ist, den betreffenden, zu bekämpfenden Bedrohungsflugkörper aus dem Luftraumabschnitt zu entfernen.

Das Ausführungsbeispiel in Fig1. zeigt als Trägerplattform 12 des Fluggeräts 10 einen elektrisch angetriebenen Multikopter. Zur Steuerung seiner Bewegung ist das Fluggerät 10 mit einer Avionikeinrichtung 20 mit Reglern und Sensoren versehen, unter diesen befinden sich, in den Fig.1 und 2 nicht näher dargestellt, ein Navigationssystem 21, ein Flugzustandsregler 22, ein Zielsystem 23, eine Inertial Measurement Unit 24, ein GPS, ein Magnetometer 26, ein barometrischer Höhensensor 27 und zumindest ein Datenlink 28, der untern anderem für die Kommunikation der Sensoren und Regler und die Verteilung von anhand von Sensor- und Berechnungsdaten erzeugten Steuersignalen zum und vom Flugzustandsregler 22 sowie für externe Kommunikation zuständig ist.

Gut zu erkennen ist hingegen sowohl in der Fig.1 als auch in der Fig.2, dass das Fluggerät 10 mit einer Bekämpfungsvorrichtung 30 versehen ist, die an der Plattform 12 dynamisch angeordnet ist, und die eine Detektionseinrichtung 33 (ausgebildet als optischer Suchkopf) und eine Wirkmitteleinrichtung 34 trägt. Die Bekämpfungsvorrichtung 30 ist hierbei insoweit dynamisch, als sie über eine kardanische Aufhängung in Form einer Ausrichtevorrichtung 32 mit der Trägerplattform 12 verbunden ist. Diese Aufhängung bringt es mit sich, dass die Bekämpfungsvorrichtung 30 bezüglich der Plattform 12 des Fluggeräts 10 in drei Freiheitsgraden beweglich ist, die durch die drei angetriebenen Gelenke mit Winkelgebern 32a, b, c repräsentiert werden. Die Wirkmitteleinrichtung 34 ist dabei jeweils sowohl mit einem Wirkmittel 34a zur physikalischen Einwirkung, als auch mit einem Wirkmittel 34b zum Einfangen eines Bedrohungsflugkörpers versehen.

Mit den Fluggeräten 10 ließe sich jeweils, im Sinne des Luftabwehrsystems auch mit mehreren Fluggeräten 10, beispielsweise das folgende Bekämpfungsszenario durchführen, das auch dem beanspruchten Verfahren entspricht: Nach anderweitiger Wahrnehmung durch dritte, nicht dargestellte Erfassungsmittel werden, koordiniert von einem übergeordneten Kontrollzentrum, die Richtung und Position eines Ziels in Form eines eingedrungenen Bedrohungsflugkörpers über den Datenlink 28 an das Fluggerät 10 übertragen. Die Bekämpfungsvorrichtung 30 wird dadurch mit ihrer Detektionseinrichtung 33 auf den detektierten Bedrohungsflugkörper automatisch ausgerichtet. Der Operator (Bedienperson) im Kontrollzentrum markiert in einem durch einen bildgebenden Sensor der Detektionseinrichtung 33 übertragenen Videobild die Abbildung des Bedrohungsflugkörpers. Hierdurch wird dem Fluggerät 10 das abzufangende Objekt mitgeteilt. Zugleich löst der Operator damit den automatisierten Abfangvorgang aus.

Der automatisierte Abfangvorgang wird autonom durch das Zielsystem 23 des Fluggeräts gesteuert. Um dieses zu gewährleisten, ist die inertiale Trajektorie des Fluggeräts 10 und die relative Trajektorie des eingedrungenen Bedrohungsflugkörpers zum Fluggerät 10 bekannt, die im Navigationssystem 21 des Avioniksystems 20 geschätzt wird.

Die Prädiktion der relativen Trajektorie (Ort, Geschwindigkeit, Beschleunigung) des Flugkörpers erfolgt dabei nun relativ zum Fluggerät 10 durch die Detektionseinrichtung 33. Durch ein nicht weiter dargestelltes Zielfilter mit "Bearing only Tracking" Technologie wird über reine Winkelinformationen die Trajektorie des Bedrohungsflugkörpers bezüglich des Fluggeräts 10 bestimmt. Durch Fusion der beiden Trajektorien von Fluggeräts 10 und Bedrohungsflugkörper kann ein vorhergesagter Treffpunkt bestimmt werden. Daraufhin kann ein optimierten Anflug auf das Ziel, also den Bedrohungsflugkörper, erfolgen.

Eine autonome Ausrichtung der Wirkmitteleinrichtung 34 mit seiner Netzkanone als Wirkmittel 34b zum Einfangen des Bedrohungsflugkörpers durch das Fluggerät 10 mit der VTOL-Plattform 12 in Zusammenspiel mit der Bekämpfungsvorrichtung 30 auf den vorhergesagten Treffpunkt unter Einbeziehung der Netzdynamik und Zieldynamik kann von dem Zielsystem 23 kommandiert werden. Die Wirkmitteleinrichtung 34 mit dem Wirkmittel 34b kann dann im optimalen Moment vom Zielsystem 23, das hier auch die Rolle eines Flugführungssystems hat, autonom ausgelöst werden.

Obwohl die vorliegende Erfindung anhand bevorzugter Ausführungsbeispiele vorstehend beschrieben wurde, ist sie darauf nicht beschränkt, sondern auf vielfältige Art und Weise modifizierbar. Insbesondere lässt sich die Erfindung in mannigfaltiger Weise verändern oder modifizieren, ohne vom Kern der Erfindung abzuweichen.

### Bezugszeichenliste

- 10: Fluggerät / CUAS
- 12: Trägerplattform
- 20: Avionikeinrichtung
- 21: Navigationssystem
- 22: Flugzustandsregelungssystem
- 24: Inertial Measurement Unit
- 25: GPS
- 26: Magnetometer
- 27: Barometrischer Höhensensor
- 28: Datenlink
- 30: Bekämpfungsvorrichtung
- 31: Zielverfolgungssystem
- 32: Ausrichtevorrichtung
- 32a-c: angetriebene Gelenke mit Winkelgebern
- 33: Detektionseinrichtung
- 34: Wirkmitteleinrichtung
- 34a: Wirkmittel zur physikalischen Einwirkung
- 34b: Wirkmittel zum Einfangen des Bedrohungsflugkörpers

## Patentansprüche

1. Unbemanntes Fluggerät (10) zur Bekämpfung von Bedrohungsflugkörpern in einem Luftraum, welches nach Zielzuordnung durch eine Bedienperson weitgehend autonom gesteuert durch den Luftraum bewegbar ist,
wobei das unbemannte Fluggerät eine fliegende Trägerplattform (12) aufweist, die dazu vorgesehen und eingerichtet ist, die Distanz zwischen dem Fluggerät (10) und einem in einen Luftraumabschnitt eingedrungenen Bedrohungsflugkörper zu verringern und das Fluggerät (10) optimal zu positionieren,
wobei das Fluggerät (10) mit einer Bekämpfungsvorrichtung (30) versehen ist, die dazu vorgesehen und eingerichtet ist, den Bedrohungsflugkörper zu bekämpfen, und
wobei die fliegende Trägerplattform (12) wenigstens ein Antriebsmittel (14) aufweist, welches von der Bekämpfungsvorrichtung (30) gelieferte Querbeschleunigungsbefehle an der Trägerplattform (12) physikalisch umsetzt.

2. Fluggerät nach Anspruch 1, wobei die Bekämpfungsvorrichtung (30) mit einer Detektionseinrichtung (33) und einer Wirkmitteleinrichtung (34) versehen ist.

3. Fluggerät nach Anspruch 2, **dadurch gekennzeichnet, dass** die Detektionseinrichtung (33) wenigstens eine Ausrichtevorrichtung (32) mit einem Zielverfolgungssystem (31) aufweist.

4. Fluggerät nach Anspruch 3, wobei das Zielverfolgungssystem (31) dazu vorgesehen und eingerichtet ist, sowohl inertiale Daten eines Navigationssystems (21), als auch relative Daten der Detektionseinrichtung (33) zu sammeln und anhand der gesammelten Daten Querbeschleunigungsbefehle für die Positionierung der Trägerplattform (12) zu berechnen.

5. Fluggerät nach Anspruch 3 oder 4, wobei das Zielverfolgungssystem (31) dazu vorgesehen und eingerichtet ist, die Ausrichtevorrichtung (32) derart auszurichten, dass die Wirkmitteleinrichtung (34) in die Lage versetzt ist, ein oder mehrere Bedrohungsflugkörper zu bekämpfen und/oder wobei das Zielverfolgungssystem (31) dazu vorgesehen und eingerichtet ist, mindestens einen optimalen Auslösezeitpunkt für wenigstens ein Wirkmittel (34a, 34b) der Wirkmitteleinrichtung (34) zu berechnen und autonom auszulösen.

6. Fluggerät nach einem der Ansprüche 2 bis 5, wobei die Detektionseinrichtung (33) mit wenigstens einem Erfassungsmittel versehen ist, und wobei das wenigstens eine Erfassungsmittel zumindest einen bildgebenden Sensor, zumindest ein Funkortungssystem und/oder zumindest einen Infrarotsuchkopf aufweist.

7. Fluggerät nach einem der Ansprüche 2 bis 6, wobei die Wirkmitteleinrichtung (34) beim Bekämpfen des in den Luftraumabschnitt eingedrungenen Bedrohungsflugkörpers ein Wirkmittel (34a, 34b) absondert, welches auf den Bedrohungsflugkörper physikalisch einwirkt und diese flugunfähig macht.

8. Fluggerät nach Anspruch 7, wobei das Wirkmittel eine Fangeinrichtung aufweist, welche den zu bekämpfenden Bedrohungsflugkörper nach Auslösung durch die Wirkmitteleinrichtung (34) zumindest abschnittsweise einhüllt.

9. Fluggerät nach Anspruch 8, wobei das den Bedrohungsflugkörper zumindest abschnittsweise einhüllende Wirkmittel (34b) nach Absonderung durch die Wirkmitteleinrichtung (34) mit dem Fluggerät (10), insbesondere abhängig von einer durch den Bedrohungsflugkörper gebildeten Traglast, verbunden bleibt.

10. Fluggerät nach Anspruch 9, wobei der Bedrohungsflugkörper, insbesondere bei Überschreiten einer maximalen, durch den Bedrohungsflugkörper gebildeten Traglast, mittels des ihn zumindest abschnittsweise einhüllenden Wirkmittels (34b) nach dessen Absonderung durch die Wirkmitteleinrichtung (34) über ein Verbindungsglied, insbesondere eine Reißleine, einen Fallschirm aus der Wirkmitteleinrichtung (34) zieht und mit diesem zum Boden schwebt.

11. Fluggerät nach einem der Ansprüche 2 bis 10, wobei die Avionikeinrichtung (20) mit einem Flugzustandsregler (22) versehen ist, der die Position des Fluggeräts (10) in drei Freiheitsgraden steuert und Querbeschleunigungsbefehle des Zielverfolgungssystems (31) umsetzt und/oder wobei die Avionikeinrichtung (20) mit einem Navigationssystem (21) versehen ist, dem eine Mehrzahl von Sensoren zugeordnet ist, welche mit dem Navigationssystem (21) Daten austauschen.

12. Fluggerät nach einem der vorhergehenden Ansprüche, wobei die Bekämpfungsvorrichtung (30) über eine Ausrichtevorrichtung (32) mit der Trägerplattform (12) statisch oder dynamisch verbindbar oder verbunden ist und wobei bei dynamischer Verbindung die Bekämpfungsvorrichtung (30) wenigstens einen Freiheitsgrad aufweist.

13. Fluggerät nach einem der vorhergehenden Ansprüche, wobei die Bekämpfungsvorrichtung (30) mit wenigstens einem Lagegeber, bevorzugt in Art eines Winkellagegebers in Form eines Resolvers, versehen ist, welcher die Lage der Bekämpfungsvorrichtung (30) bezüglich der Trägerplattform (12), bestimmt.

14. System zur Bekämpfung von in einen Luftraumabschnitt eindringenden Bedrohungsflugkörpern mittels zumindest eines Fluggeräts (10), bevorzugt einer Mehrzahl von Fluggeräten (10), insbesondere von Fluggeräten (10) nach einem der vorhergehenden Ansprüche und mit einer übergeordneten Steuer- und Entscheidungsinstanz, welche Flugbewegungen und Bekämpfungsmaßnahmen des wenigstens einen Fluggeräts (10) kontrolliert und koordiniert.

15. Verfahren zur Bekämpfung wenigstens eines Bedrohungsflugkörpers mittels eines Fluggeräts (10), insbesondere eines Fluggeräts (10) nach einem der vorhergehende Ansprüche, mit den folgenden Verfahrensschritten:
Zur Verfügung Stellen eines Fluggeräts (10) mit einer Trägerplattform (12), der eine Avionikeinrichtung (20) zugeordnet ist, wobei an der Trägerplattform (12) eine Bekämpfungseinrichtung (30) befestigt ist, welche ein Zielverfolgungssystem (31), eine Ausrichtevorrichtung (32), eine Detektionseinrichtung (33) und eine Bekämpfungseinrichtung (34) aufweist;
Erfassen und Verfolgen eines in den Luftraum eindringenden Bedrohungsflugkörpers durch Auswertung von Daten eines Navigationssystems (22) und von der Detektionseinrichtung (33) durch das Zielverfolgungssystem (31) ;
Annähern des Fluggeräts (10) an den Bedrohungsflugkörper und Ausrichten der Bekämpfungseinrichtung (34) auf die zu bekämpfenden Bedrohungsdrohne durch die Ausrichtevorrichtung;
Auslösen eines Bekämpfungsvorgangs in einem durch das Zielverfolgungssystem (31) berechneten optimalen Zeitpunkt;
Abfangen oder Einfangen des Bedrohungsflugkörpers durch die Bekämpfungseinrichtung (34); und
Entfernen des Bedrohungsflugkörpers aus dem Luftraum.
